# DEMANDE DE BREVET EUROPEEN

(11) **EP 3 666 069 A1**
(43) Date de publication de la demande: **17.06.2020**
(21) Numéro de dépôt: 19214902.9
(22) Date de dépôt: 10.12.2019
(51) Int. Cl.: A01M 7/00, A01M 9/00

(54) **RAMPE DE PULVERISATION A JETS UNIVERSELLE**

(30) Priorité: 10.12.2018 FR 1872630
(71) Demandeur: Pommier - S.C.E.B.P., 28150 Eole-en-Beauce (FR)
(72) Inventeur: LASNE, Frédéric, 28360 MESLAY-LE-VIDAME (FR); POMMIER, Nicolas, 28150 EOLE-EN-BEAUCE (FR)
(74) Mandataire: Oudin, Stéphane

(57) **Abrégé**

La présente invention a pour objet une rampe à jets universelle pour la pulvérisation ou l'épandage granulaire ou liquide comportant de manière classique deux bras articulés et munis chacun d'une pluralité de segments (3) aptes à être repliés sur eux-mêmes, chaque segment (3) comportant au moins un profilé inférieur (4) déterminant un logement longitudinal (5) ouvert vers le bas et à chacune de ses extrémités longitudinales, ladite rampe à jets universelle recevant un équipement de pulvérisation, remarquable en ce qu'elle comporte et une pluralité d'organes de prémontage (6) aptes, d'une part, à supporter ledit équipement de pulvérisation et, d'autre part, à être insérés dans le logement (5) et solidarisés de manière amovible sur le profilé inférieur (4) le long desdits bras, lesdits profilé inférieur (4) et logement (5) étant configurés pour accueillir entièrement les organes de prémontage (6) et l'équipement de pulvérisation.

## Description

### Domaine technique de l'invention

La présente invention se rapporte au domaine général de l'agriculture. Elle vise plus précisément une rampe de pulvérisation ou d'épandage granulaire ou liquide.

### Etat de la technique

Dans le domaine de l'agriculture, il est connu de traiter les cultures végétales pour lutter contre les insectes, les maladies ou encore les mauvaises herbes, afin de garantir un bon rendement de l'exploitation.

Pour ce faire, on utilise de manière classique, un pulvérisateur ou épandeur porté ou trainé par un tracteur, ou encore autopropulsé, et comportant au moins :
- une cuve contenant un mélange de produit phytosanitaire et d'eau ou d'engrais liquide,
- une rampe comportant deux bras articulés de part et d'autre de ladite cuve, munis chacun de plusieurs segments aptes à être repliés sur eux-mêmes durant le déplacement sur route du pulvérisateur, et supportant des buses de pulvérisation ou d'épandage, et
- une pompe mettant sous pression le mélange contenu dans la cuve et aspirant ce dernier pour l'envoyer vers la rampe et les buses.

L'un des principaux inconvénients des pulvérisateurs ou épandeurs est lié à la fabrication des bras et de leurs segments. En effet, ces derniers doivent répondre aux contraintes suivantes :
- avoir une structure avec une résistance mécanique importante notamment pour les bras et segments de grande largueur,
- accueillir l'équipement nécessaire à la pulvérisation ou épandage (tuyauterie, portes-buses, pattes de fixation, buses, ...) et le protéger contre les collisions ou les accrochages avec les cultures végétales à traiter,
- permettre la mise en place des buses de pulvérisation sans interférence avec ladite structure et selon un espacement régulier afin de garantir une pulvérisation homogène de la bouillie, ledit espacement entre les buses de pulvérisation étant variable selon les pays d'exploitation des rampes et/ou les fabricants des buses de pulvérisation.

Pour pallier la plupart de ces inconvénients, il existe déjà des rampes de pulvérisation, telles que, par exemple, celles décrites dans les demande de brevet américain US 2006/201075 et US 2016/263371, dont les bras sont munis de segments comportant au moins un premier profilé disposé en partie inférieure et déterminant un logement longitudinal ouvert vers le bas et à chacune de ses extrémités longitudinales, le premier profilé et le logement étant configurés pour accueillir entièrement l'équipement nécessaire à la pulvérisation ou l'épandage. On comprend bien qu'avec un tel logement dégageant un espace sur toute la longueur de l'élément modulaire, les buses de pulvérisation peuvent être mises en place dans ledit logement sans interférence avec la structure dudit élément modulaire, quel que soit l'espacement entre les buses.

Toutefois, ce type de rampe, qui est très pratique, présente toujours un inconvénient lié à la mise en place dudit équipement nécessaire à la pulvérisation ou l'épandage.

En effet, pour mettre en place cet équipement sur ces rampes, on assemble traditionnellement en premier lieu la partie mécanique et hydraulique, puis un opérateur fixe, un par un, les tuyaux, gaines, buses ou éclateurs, fils électriques ou capillaires pneumatiques sur la structure desdites rampes par des organes de fixation tels que, par exemple, des noix de serrage vissées sur des pattes de fixations pour les canalisations rigides et des colliers plastiques pour les tuyaux souples, fils et capillaires. Cette opération est longue et fastidieuse car elle est réalisée au travers des éléments de structure des rampes. De plus, cette opération doit être réalisée obligatoirement à la fin des opérations de fabrication de la structure des rampes, ce qui augmente d'autant le délai de fabrication de ces dernières.

### Exposé de l'invention

Le but de la présente invention est de proposer une rampe de pulvérisation ou d'épandage granulaire ou liquide facile et rapide à fabriquer en permettant notamment un montage des éléments de pulvérisation réalisé indépendamment de la fabrication de la structure de la rampe puis un assemblage de l'ensemble final simple et rapide, tout en garantissant une résistance mécanique importante quelle que soit leur largeur et en permettant la mise en place des buses de pulvérisation sans interférence avec ladite structure, quel que soit leur espacement.

Conformément à l'invention, il est donc proposé une rampe à jets universelle pour la pulvérisation ou l'épandage granulaire ou liquide comportant de manière classique deux bras articulés et munis chacun d'une pluralité de segments aptes à être repliés sur eux-mêmes, chaque segment comportant au moins un profilé inférieur déterminant un logement longitudinal ouvert vers le bas et à chacune de ses extrémités longitudinales, ladite rampe à jets universelle recevant un équipement de pulvérisation remarquable en ce qu'elle comporte et une pluralité d'organes de prémontage aptes, d'une part, à supporter ledit équipement de pulvérisation et, d'autre part, à être insérés dans le logement et solidarisés de manière amovible sur le profilé inférieur le long desdits bras, lesdits profilé inférieur et logement étant configurés pour accueillir entièrement les organes de prémontage et l'équipement de pulvérisation.

Le profilé inférieur a avantageusement une section transversale en forme globale de C pivoté de 90° et comporte une âme sensiblement horizontale, deux ailes issues des bords longitudinaux de ladite âme et s'étendant vers le bas dudit profilé inférieur, et deux rebords issus chacun des bords longitudinaux inférieurs desdites ailes et s'étendant sensiblement horizontalement vers l'intérieur desdites ailes en étant en vis-à-vis.

Selon un mode de réalisation préféré, chaque organe de prémontage a une section transversale en forme générale de U inversé et comporte une âme sensiblement horizontale, deux ailes issues des bords longitudinaux de ladite âme et s'étendant vers le bas de l'organe de prémontage, chaque aile étant élastiquement déformable et comportant, sur sa face externe à proximité de son bord longitudinal libre, un talon disposé en saillie vers l'extérieur dudit organe de prémontage et comportant au moins une face inférieure plane, et chaque organe de prémontage est dimensionné pour venir se clipser à l'intérieur du profilé inférieur entre ses ailes

Le talon de chaque aile des organes de prémontage comporte avantageusement une face inclinée faisant office de rampe et permettant un resserrement progressif desdites ailes lors du clipsage desdits organes de prémontage dans le profilé inférieur associé.

Chaque organe de prémontage a de préférence une section transversale en forme générale de U inversé évasé.

L'âme et les ailes de chaque organe de prémontage sont avantageusement assemblées entre elles de façon amovible pour permettre d'adapter la largeur dudit organe de prémontage.

L'âme et les ailes de chaque organe de prémontage sont de préférence assemblées entre elles par une liaison glissière du type queue d'aronde

Selon une variante de réalisation, chaque organe de prémontage a une section transversale en forme générale de U inversé évasé et comporte une âme sensiblement horizontale, deux ailes issues des bords longitudinaux de ladite âme et s'étendant vers le bas de l'organe de prémontage, chacune des ailes de l'organe de prémontage étant élastiquement déformable et chaque organe de prémontage est dimensionné pour venir se clipser à l'intérieur du profilé inférieur entre ses ailes.

De manière avantageuse, chaque aile comporte une première portion plane issue du bord longitudinal associé de l'âme et s'étendant vers l'extérieur de l'organe de prémontage, une deuxième portion plane issue du bord longitudinal libre de ladite première portion et s'étendant vers l'intérieur de l'organe de prémontage et une troisième portion plane issue du bord longitudinal libre de ladite deuxième portion et s'étendant globalement perpendiculairement à ladite âme, la zone de jonction entre les première et deuxième portions fait office de talon.

De manière préférée, la rampe à jets universelle selon l'invention comporte des moyens de fixations complémentaires assurant l'immobilisation des organes de prémontage une fois ces derniers clipsés à l'intérieur du profilé inférieur associé

### Description sommaire des figures

D'autres avantages et caractéristiques ressortiront mieux de la description qui va suivre d'un mode d'exécution de l'invention en référence aux figures annexées sur lesquelles :
[Fig 1] est une vue en perspective d'un bras d'une rampe à jets universelle selon l'invention,
[Fig 2] est une vue en perspective agrandie du segment du bras de la figure 1,
[Fig 3] est une section verticale agrandie du segment de la figure 2 selon l'axe III-III',
[Fig 4] est une vue de détail agrandie de la figure 3,
[Fig 5] est une vue de détail agrandie de la figure 3 avec un organe de prémontage,
[Fig 6] est une vue en perspective agrandie de l'organe de prémontage de la figure 5 dans lequel est mise en place une partie de l'équipement de pulvérisation représenté en trait fin pointillé à savoir buse de pulvérisation,
[Fig 7] est une vue de détail agrandie de la figure 3 avec une variante de réalisation de l'organe de prémontage
[Fig 8] est une vue en perspective agrandie de l'organe de prémontage de la figure 7.

### Meilleure manière de réaliser l'invention technique

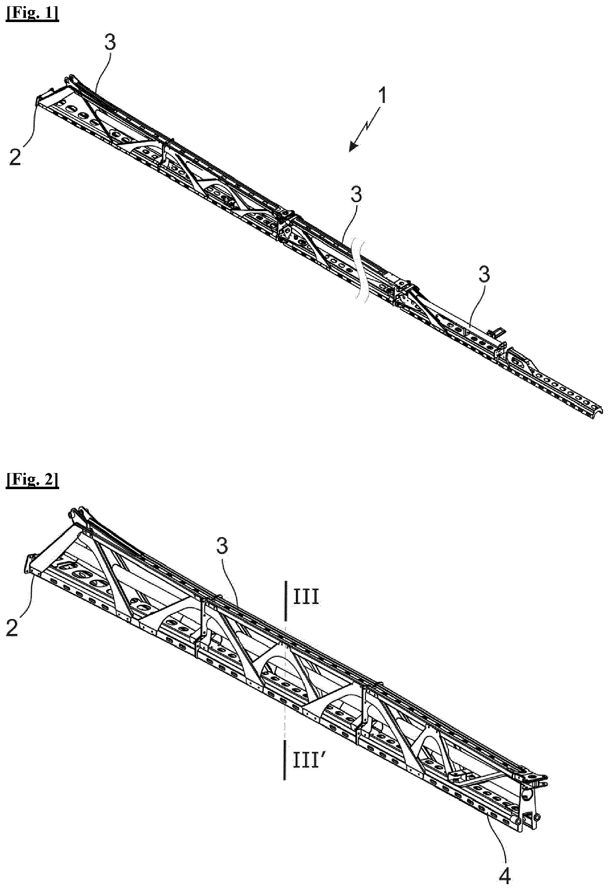

En référence aux figures 1 à 4, la rampe 1 à jets universelle de pulvérisation ou d'épandage granulaire ou liquide selon l'invention, nommée ci-après rampe 1 à jets universelle, comporte de manière classique deux bras 2 articulés, munis chacun d'une pluralité de segments 3 aptes à être repliés sur eux-mêmes.

Chaque segment 3 comporte au moins un profilé inférieur 4 déterminant un logement longitudinal 5 ouvert vers le bas et à chacune de ses extrémités longitudinales.

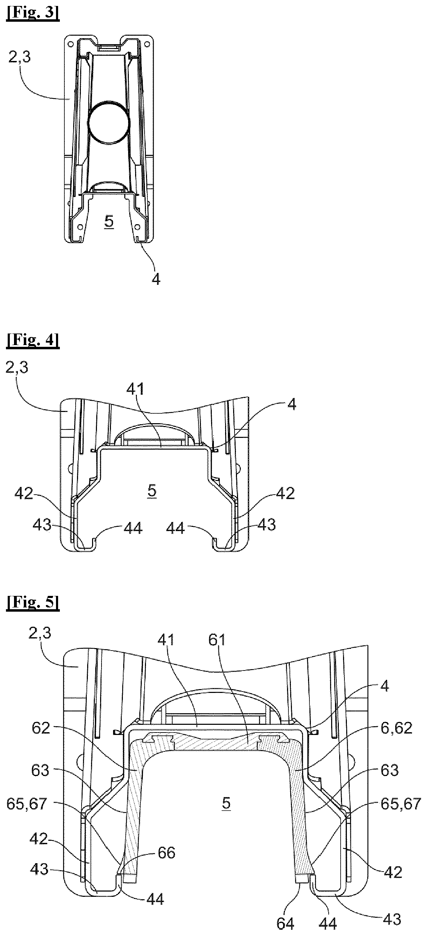

Ledit profilé inférieur 4 a de préférence une section transversale en forme globale de C pivoté de 90° et comporte une âme 41 sensiblement horizontale, deux ailes 42 issues des bords longitudinaux de ladite âme 41 et s'étendant vers le bas du segment 3, et deux rebords 43 issus chacun des bords longitudinaux inférieurs desdites ailes 42 et s'étendant sensiblement horizontalement vers l'intérieur desdites ailes 42 en étant en vis-à-vis (Cf. figure 4).

Dans l'exemple de réalisation représenté, les rebords 43 ont avantageusement, pour des raisons de tenue mécanique, une section verticale en forme de L et comportent chacune un retour 44 issus de leur bord longitudinal libre et s'étendant vers le haut du segment 3.

Toutefois, on comprend bien que les rebords 43 pourront avoir une section verticale d'une toute autre forme sans sortir du cadre de la présente invention.

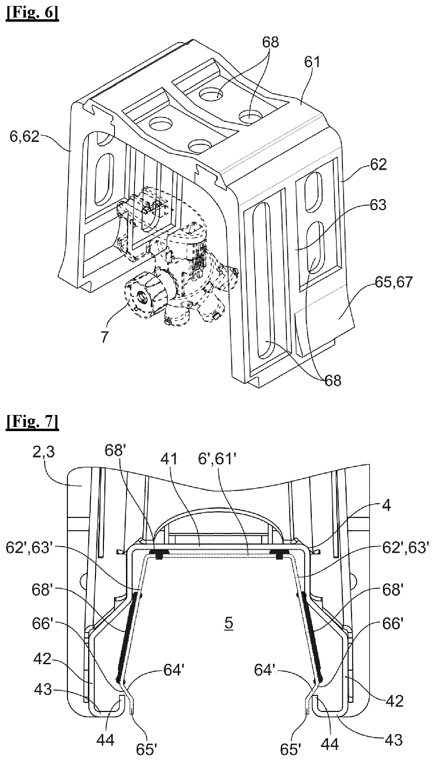

En référence aux figures 5 et 6, la rampe 1 à jets universelle comporte en outre une pluralité d'organes de prémontage 6 aptes, d'une part, à supporter l'équipement 7 de pulvérisation et, d'autre part, à être insérés dans le logement 5 et solidarisés de manière amovible sur le profilé inférieur 4 le long du bras 2 de la rampe 1 à jets universelle.

On désigne ici par "équipement 7 de pulvérisation" l'équipement mis en place sur la rampe 1 à jets universelle et nécessaire à la pulvérisation ou à l'épandage granulaire ou liquide, ledit équipement comportant notamment des tuyauteries, gaines, fils électriques ou capillaires pneumatiques, buses ou éclateurs, portes-buses, ou encore pattes de fixation.

Le profilé inférieur 4, le logement 5 et les organes de prémontage 6 sont configurés pour accueillir entièrement les organes de prémontage 6 et l'équipement 7 de pulvérisation.

On désigne ici par "accueillir entièrement" le fait qu'une fois en place dans le logement 5, l'ensemble organes de prémontage 6 et équipement 7 de pulvérisation ne dépasse pas du premier profilé 4, notamment du bord inférieur de ses ailes 42.

Avec cette configuration, on comprend bien qu'une fois en place dans ledit logement 5, l'ensemble organes de prémontage 6 et équipement 7 de pulvérisation est parfaitement protégé contre les collisions ou les accrochages avec les cultures végétales à traiter, par le premier profilé 4 et notamment par ses ailes 42 et ses rebords 43.

On comprend bien que cette configuration de la rampe 1 à jets universelle conforme à l'invention permet un montage rapide et adaptatif de l'équipement 7 de pulvérisation. En effet, un opérateur peut, à l'avance et hors de la structure de la rampe 1 à jets universelle, assembler entre eux sous la forme d'un fagot les différents éléments de l'équipement 7 de pulvérisation, quel que soit l'espacement des buses, puis insérer ledit fagot dans le logement 5 du profilé inférieur 4 de chaque segment 3 de chaque bras 2 de la rampe 1 à jets universelle, une fois la fabrication de cette dernière entièrement terminée, et enfin solidariser chaque organe de prémontage 6 de manière amovible sur le profilé inférieur 4 associé sans risque d'interférence avec la structure de la rampe 1 à jets universelle.

Pour des raisons économiques et pratiques, on comprend bien que les organes de prémontage 6 sont au moins au nombre de deux et répartis ponctuellement le long de chaque segment 3 de chaque bras 2 de la rampe 1 à jets universelle, pour garantir le parfait maintien du fagot les différents éléments de l'équipement 7 de pulvérisation à l'intérieur du logement 5 du profilé inférieur 4 de chaque segment 3.

On comprend bien que l'assemblage et la solidarisation du fagot d'éléments de l'équipement 7 de pulvérisation sont réalisés ainsi en un nombre réduit d'opérations. Par ailleurs, on comprend bien que l'assemblage dudit fagot peut avantageusement se faire parallèlement et/ou en temps masqué par rapport à la fabrication de la structure de la rampe 1 à jets universelle, en automatisant au moins partiellement toute ou partie de ces opérations, ce qui permet de diminuer significativement le coût de production de la rampe 1 à jets universelle selon l'invention.

Par ailleurs, on comprend bien les organes de prémontage 6 ne sont dimensionnés que pour supporter l'équipement 7 de pulvérisation et ne participent en aucun cas à la tenue mécanique de la structure de la rampe 1 à jets universelle, puisque les organes de prémontage 6 n'ont pas de position prédéterminée et que l'ensemble organes de prémontage 6 et équipement 7 de pulvérisation est mis en place dans logement 5 du profilé inférieur 4 de chaque segment 3 de chaque bras 2 de la rampe 1 à jets universelle, une fois la fabrication de cette dernière entièrement terminée

Selon un mode de réalisation avantageux représenté, chaque organe de prémontage 6 a une section transversale en forme générale de U inversé et comporte une âme 61 sensiblement horizontale, deux ailes 62 issues des bords longitudinaux de ladite âme 61 et s'étendant vers le bas de l'organe de prémontage 6.

L'âme 61 et les ailes 62 sont avantageusement assemblées entre elles de façon amovible pour permettre d'adapter la largeur de l'organe de prémontage 6 à la largeur du profilé inférieur 4 des segments 3 du bras 2 de la rampe 1 à jets universelle conforme à l'invention en mettant en place une âme 61 plus ou moins large.

Ainsi, l'âme 61 et les ailes 62 pourront être assemblées entre elles, par exemple, par une liaison glissière du type queue d'aronde, comme cela est représenté sur les figures 5 et 6.

Chaque aile 62 de l'organe de prémontage 6 est élastiquement déformable et comporte, sur sa face externe 63 à proximité de son bord longitudinal 64 libre, un talon 65 disposé en saillie vers l'extérieur dudit organe de prémontage 6. Ledit talon 65 comporte au moins une face inférieure 66 plane sensiblement horizontale, et avantageusement une face inclinée 67.

Chaque organe de prémontage 6 est dimensionné pour venir se clipser à l'intérieur du profilé inférieur 4 de chaque segment 3 entre ses ailes 42.

On entend ici par "clipser à l'intérieur du profilé inférieur 4 le fait que, lorsque l'organe de prémontage 6 est en place à l'intérieur dudit profilé inférieur 4 associé, la face supérieure de son aile 61 est en appui contre la face inférieure de l'aile 41 dudit profilé inférieur 4, et la face inférieure 66 de chaque talon 65 et la partie de la face externe 63 de chacune de ses ailes 62 située sous ledit talon 65 sont en appui contre le rebord 43 associé dudit profilé inférieur 4 pour maintenir en position ledit organe de prémontage 6, l'appui contre ledit rebord 43 étant assuré par l'élasticité des ailes 62 de l'organe de prémontage 6 qui crée un effort tendant à écarter les bords longitudinaux 64 libres de ces dernières.

Pour cela, on comprend bien que l'organe de prémontage 6 est dimensionné pour que sa largeur hors-tout entre ses talons 65 soit strictement supérieure à la largeur entre les rebords 43 du profilé inférieur 4 associé.

Par ailleurs, on comprend bien que la face inclinée 67 des talons 65 de chaque organe de prémontage 6 fait office de rampe et permet un resserrement progressif des ailes 62 de ce dernier lors de son clipsage dans le profilé inférieur 4 associé.

Enfin, en référence à la figure 6, chaque organe de prémontage 6 comporte, de manière évidente, une pluralité d'orifices 68 traversant aménagés sur son âme 61 et/ou sur ses ailes 62, lesdits orifices 68 permettant la fixation des différents éléments de l'équipement 7 de pulvérisation sur ledit organe de prémontage 6 et l'immobilisation de ce dernier une fois clipsé à l'intérieur du profilé inférieur 4 associé par des moyens de fixations complémentaires tels que, par exemple, des boulons ou des rivets. Les moyens de fixations complémentaires pourront également être de la colle.

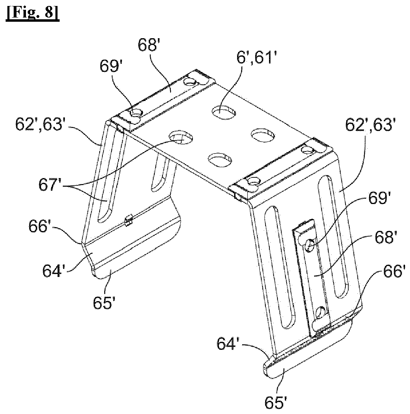

On a représenté sur les figures 7 et 8 une variante de réalisation des organes de prémontage 6' semblables aux organes de prémontage 6 précédemment décrits et aptes, d'une part, à supporter l'équipement 7 de pulvérisation et, d'autre part, à être insérés dans le logement 5 et solidarisés de manière amovible sur le profilé inférieur 4 le long du bras 2 de la rampe 1 à jets universelle.

Chaque organe de prémontage 6' a une section transversale en forme générale de U évasé inversé et comporte une âme 61' sensiblement horizontale, deux ailes 62' issues des bords longitudinaux de ladite âme 61' et s'étendant vers le bas de l'organe de prémontage 6', chacune des ailes 62' de l'organe de prémontage 6' étant élastiquement déformable.

Chaque aile 62' comporte une première portion 63' plane issue du bord longitudinal associé de l'âme 61' et s'étendant vers l'extérieur de l'organe de prémontage 6', une deuxième portion 64' plane issue du bord longitudinal libre de ladite première portion 61' et s'étendant vers l'intérieur de l'organe de prémontage 6' et une troisième portion 65' plane issue du bord longitudinal libre de ladite deuxième portion 61' et s'étendant globalement perpendiculairement à ladite âme 61'. Avec cette configuration et un dimensionnement adapté de l'organe de prémontage 6', la zone de jonction entre les première et deuxième portions 63',64' fait office de talon 66' et permet de venir clipser ledit organe de prémontage 6' à l'intérieur du profilé inférieur 4 de chaque segment 3 entre ses ailes 42 (Cf. figure 7).

On entend ici par "clipser à l'intérieur du profilé inférieur 4 le fait que, lorsque l'organe de prémontage 6' est en place à l'intérieur dudit profilé inférieur 4 associé, la face supérieure de son aile 61' est en appui contre la face inférieure de l'aile 41 dudit profilé inférieur 4, et la face inférieure de chaque deuxième portion 64' est en appui contre le rebord 43 associé dudit profilé inférieur 4 pour maintenir en position ledit organe de prémontage 6', l'appui contre ledit rebord 43 étant assuré par l'élasticité des ailes 62' de l'organe de prémontage 6' qui crée un effort tendant à écarter les extrémités libres de ces dernières.

Pour cela, on comprend bien que l'organe de prémontage 6' est dimensionné pour que sa largeur hors-tout entre les talons 66' soit strictement supérieure à la largeur entre les rebords 43 du profilé inférieur 4 associé.

Par ailleurs, on comprend bien que la face inclinée de la première portion 63' des ailes 62' de chaque organe de prémontage 6' fait office de rampe et permet un resserrement progressif desdites ailes 62' de ce dernier lors de son clipsage dans le profilé inférieur 4 associé.

De plus, en référence à la figure 8, chaque organe de prémontage 6' comporte, de manière évidente, une pluralité d'orifices 67' traversant aménagés sur son âme 61' et/ou sur ses ailes 62', lesdits orifices 67' permettant la fixation des différents éléments de l'équipement 7 de pulvérisation sur ledit organe de prémontage 6' et l'immobilisation de ce dernier une fois clipsé à l'intérieur du profilé inférieur 4 associé par des moyens de fixations complémentaires tels que, par exemple, des boulons ou des rivets. Les moyens de fixations complémentaires pourront également être de la colle.

Enfin, pour les mêmes raisons, chaque organe de prémontage 6' pourra également comporter des plaques de renfort 68' munie d'orifices 69', avantageusement des taraudages, fixés sur son âme 61' et/ou sur ses ailes 62', ces plaques de renfort 68' étant avantageusement disposées sur les faces desdites âme 61' et/ou ailes 62' situées à l'extérieur dudit organe de prémontage 6' pour libérer un maximum d'espace à l'intérieur de ce dernier. Dans cette dernière hypothèse, lorsque l'organe de prémontage 6' est clipsé à l'intérieur dudit profilé inférieur 4 associé, la face supérieure des plaques de renfort 68' fixées sur son aile 61' est alors en appui contre la face inférieure de l'aile 41 dudit profilé inférieur 4

### Possibilité d'application industrielle

La rampe 1 à jets universelle selon l'invention s'applique à la pulvérisation ou l'épandage granulaire ou liquide quel que soit l'espacement entre les buses 7 de pulvérisation ou d'épandage.

Enfin, il va de soi que de rampes 1 à jets universelle conformes à l'invention qui viennent d'être décrits ne sont que des illustrations particulières, en aucun cas limitatives de l'invention.

## Revendications

1. Rampe (1) à jets universelle pour la pulvérisation ou l'épandage granulaire ou liquide comportant de manière classique deux bras (2) articulés et munis chacun d'une pluralité de segments (3) aptes à être repliés sur eux-mêmes, chaque segment (3) comportant au moins un profilé inférieur (4) déterminant un logement longitudinal (5) ouvert vers le bas et à chacune de ses extrémités longitudinales, ladite rampe (1) àjets universelle recevant un équipement (7) de pulvérisation **caractérisée en ce qu'**elle comporte une pluralité d'organes de prémontage (6,6') aptes, d'une part, à supporter ledit équipement (7) de pulvérisation et, d'autre part, à être insérés dans le logement (5) et solidarisés de manière amovible sur le profilé inférieur (4) le long desdits bras (2), lesdits profilé inférieur (4) et logement (5) étant configurés pour accueillir entièrement les organes de prémontage (6,6') et l'équipement (7) de pulvérisation.

2. Rampe (1) à jets universelle selon la revendication 1 **caractérisée en ce que** le profilé inférieur (4) a une section transversale en forme globale de C pivoté de 90° et comporte une âme (41) sensiblement horizontale, deux ailes (42) issues des bords longitudinaux de ladite âme (41) et s'étendant vers le bas dudit profilé inférieur (4), et deux rebords (43) issus chacun des bords longitudinaux inférieurs desdites ailes (42) et s'étendant sensiblement horizontalement vers l'intérieur desdites ailes (42) en étant en vis-à-vis.

3. Rampe (1) à jets universelle selon la revendication 2 **caractérisée en ce que** chaque organe de prémontage (6) a une section transversale en forme générale de U inversé et comporte une âme (61) sensiblement horizontale, deux ailes (62) issues des bords longitudinaux de ladite âme (41) et s'étendant vers le bas de l'organe de prémontage (6), chaque aile (62) étant élastiquement déformable et comportant, sur sa face externe (63) à proximité de son bord longitudinal (64) libre, un talon (65) disposé en saillie vers l'extérieur dudit organe de prémontage (6) et comportant au moins une face inférieure (66) plane et **en ce que** chaque organe de prémontage (6) est dimensionné pour venir se clipser à l'intérieur du profilé inférieur (4) entre ses ailes (42).

4. Rampe (1) à jets universelle selon la revendication 3 **caractérisée en ce que** le talon (65) de chaque aile (62) des organes de prémontage (6) comporte une face inclinée (67) faisant office de rampe et permettant un resserrement progressif desdites ailes (62) lors du clipsage desdits organes de prémontage (6) dans le profilé inférieur (4) associé.

5. Rampe (1) à jets universelle selon l'une quelconque des revendications 3 ou 4 **caractérisée en ce que** chaque organe de prémontage (6) a une section transversale en forme générale de U inversé évasé.

6. Rampe (1) à jets universelle selon l'une quelconque des revendications 3 à 5 **caractérisée en ce que** l'âme (61) et les ailes (62) de chaque organe de prémontage (6) sont assemblées entre elles de façon amovible pour permettre d'adapter la largeur dudit organe de prémontage (6).

7. Rampe (1) à jets universelle selon la revendication 6 **caractérisée en ce que** l'âme (61) et les ailes (62) de chaque organe de prémontage (6) sont assemblées entre elles par une liaison glissière du type queue d'aronde.

8. Rampe (1) à jets universelle selon la revendication 2 **caractérisée en ce que** chaque organe de prémontage (6') a une section transversale en forme générale de U inversé évasé et comporte une âme (61') sensiblement horizontale, deux ailes (62') issues des bords longitudinaux de ladite âme (61') et s'étendant vers le bas de l'organe de prémontage (6'), chacune des ailes (62') de l'organe de prémontage (6') étant élastiquement déformable et **en ce que** chaque organe de prémontage (6') est dimensionné pour venir se clipser à l'intérieur du profilé inférieur (4) entre ses ailes (42).

9. Rampe (1) à jets universelle selon la revendication 8 **caractérisée en ce que** chaque aile (62') comporte une première portion (63') plane issue du bord longitudinal associé de l'âme (61') et s'étendant vers l'extérieur de l'organe de prémontage (6'), une deuxième portion (64') plane issue du bord longitudinal libre de ladite première portion (61') et s'étendant vers l'intérieur de l'organe de prémontage (6') et une troisième portion (65') plane issue du bord longitudinal libre de ladite deuxième portion (61') et s'étendant globalement perpendiculairement à ladite âme (61'), la zone de jonction entre les première et deuxième portions (63',64') fait office de talon (66').

10. Rampe (1) à jets universelle selon l'une quelconque des revendications 3 à 9 **caractérisée en ce qu'**elle comporte des moyens de fixations complémentaires assurant l'immobilisation des organes de prémontage (6) une fois ces derniers clipsés à l'intérieur du profilé inférieur (4) associé.
